Europäisches Patentamt

European Patent Office

Office européen des brevets

(19)

(11) Veröffentlichungsnummer: **0 058 339**
**B1**

(12) # EUROPÄISCHE PATENTSCHRIFT

(45) Veröffentlichungstag der Patentschrift:
24.07.85

(51) Int. Cl.⁴: **G 09 B 15/02, G 10 C 3/12**

(21) Anmeldenummer: 82100724.2

(22) Anmeldetag: 02.02.82

(54) **Musikinstrument mit Tastatur, insbesondere Klavier od. dgl.**

(30) Priorität: 17.02.81 DE 3105724

(43) Veröffentlichungstag der Anmeldung:
25.08.82 Patentblatt 82/34

(45) Bekanntmachung des Hinweises auf die Patenterteilung:
24.07.85 Patentblatt 85/30

(84) Benannte Vertragsstaaten:
AT BE CH DE FR GB IT LI LU NL SE

(56) Entgegenhaltungen:
DE - A - 2 721 432
US - A - 2 028 809
US - A - 3 750 516
US - A - 4 040 324

(73) Patentinhaber: Apel, Siegfried, Ziegenrückstrasse 24,
D-8647 Stockheim (DE)
Patentinhaber: Apel, Marlene, Kellerstrasse 9,
D-8647 Stockheim (DE)

(72) Erfinder: Apel, Siegfried, Ziegenrückstrasse 24,
D-8647 Stockheim (DE)
Erfinder: Apel, Marlene, Kellerstrasse 9,
D-8647 Stockheim (DE)

(74) Vertreter: Metzler, Jürgen, Dipl.-Ing., Ketschendorfer
Strasse 76, D-8630 Coburg (DE)

## Beschreibung

Die Erfindung bezieht sich auf ein Musikinstrument mit Tastatur, insbesondere Klavier od.dgl. mit Klaviatur, bei dem Lernhilfen in Form von Schablonen einsetzbar sind.

Mit Tastatur oder Klaviatur wird die Gesamtheit der Tasten eines Tasteninstruments (Orgel, Klavier, Klavichord usw.) bezeichnet. Sie besteht aus sieben weissen Untertasten und fünf schwarzen Obertasten je Oktave, wobei die ersteren die C-dur-Tonleiter bilden. Je nach Breite des jeweiligen Musikinstruments umfasst die Tastatur bzw. Klaviatur mehrere Oktaven.

Bei herkömmlichen Tastaturen oder Klaviaturen sind die weissen Tasten gleichbreit ausgebildet. Eine Anwendung von Lernhilfen in Form von Schablonen zur Darstellung aller harmonischen Formen ist auf diesen bekannten Tastaturen nicht möglich. Bei diesen bekannten Tastaturen lassen sich auch vielerlei Griffe von Personen mit kleineren Händen, also vor allem von Kindern, nicht ausführen.

Die Aufgabe der Erfindung besteht deshalb darin, ein Musikinstrument mit einer Tastatur bzw. Klaviatur zu schaffen, bei dem die Verwendung von Schablonen möglich ist, wobei bei gleicher Grösse des Instruments ein vergrösserter Tonumfang bzw. bei gleichem Tonumfang eine Verkleinerung des Instruments erreichbar ist. Eine weitere wesentliche Aufgabe besteht darin, die einzelnen Spielgriffe, wie Unter- und Übersetzen, Oktav-, Nonen- und Dezimengriffe, das Spielen von Akkorden mit Grundton + Terz + Quint, Kadenzen und Arpeggien, besonders für Spieler mit kleineren Händen wesentlich zu erleichtern.

Diese Aufgabe wird erfindungsgemäss durch die im kennzeichnenden Teil des Hauptanspruchs angegebenen Gestaltungsmerkmale gelöst, wobei noch in den weiteren Ansprüchen für die Aufgabenlösung vorteilhafte und förderliche Weiterbildungen beansprucht sind.

Durch die angegebene Breitenverringerung bestimmter Tasten wird die Gesamtbreite der Tastatur und damit das gesamte Musikinstrument in der Breite entsprechend verringert. Die Tastatur ist leichter spielbar. Vor allem aber lässt sich hierdurch eine gleichmässige Anlegeeinteilung für Schablonen ermöglichen, so dass der Lernprozess wesentlich beschleunigt und verkürzt wird.

Bei der Erfindung sind Ganz- und Halbtonschritte im Notenbild und auf den Schablonen optisch erkennbar. Die Lage aller Töne sowie alle Erhöhungen durch # und ✕ , alle Erniedrigungen durch b und bb und alle notwendigen Auflösungen lassen sich gleichzeitig auf der Notenlineatur und der Klaviatur auf einen Blick aufzeigen, was das Verständnis wesentlich fördert.

Mit der Erfindung lassen sich alle Tonleitern, Terzen, Drei- und Vierklänge samt ihren Umkehrungen, Haupt- und Nebenintervalle, Kadenzen und Transponierungen optisch und akustisch aufzeigen, und zwar unter Zuhilfenahme entsprechend ausgebildeter Schablonen, einer der Klaviatur gemäss der Erfindung entsprechenden Lehrtafel und/oder dem mit der erfindungsgemässen Klaviatur versehenen Musikinstrument. Mit den Schablonen wird dem Auszubildenden das Auffinden, Kennenlernen, Benennen und Üben von gelehrten harmonischen Formen ermöglicht und erleichtert.

Die Erfindung wird nun anhand von Ausführungsbeispielen im Zusammenhang mit der Zeichnung näher erläutert. Es zeigen:

Fig. 1 den Ausschnitt aus einer Tastatur bzw. Klaviatur eines Musikinstruments mit gleichmässiger Anlegeeinteilung und angelegter Schablone,

Fig. 2 ein kastenförmig ausgebildetes Musikinstrument,

Fig. 3 ein Musikinstrument mit Lehrtafel und

Fig. 4 eine Schablone mit ausgestanzten Feldern am Beispiel des verminderten Dreiklangs bzw. des Moll-Dreiklangs.

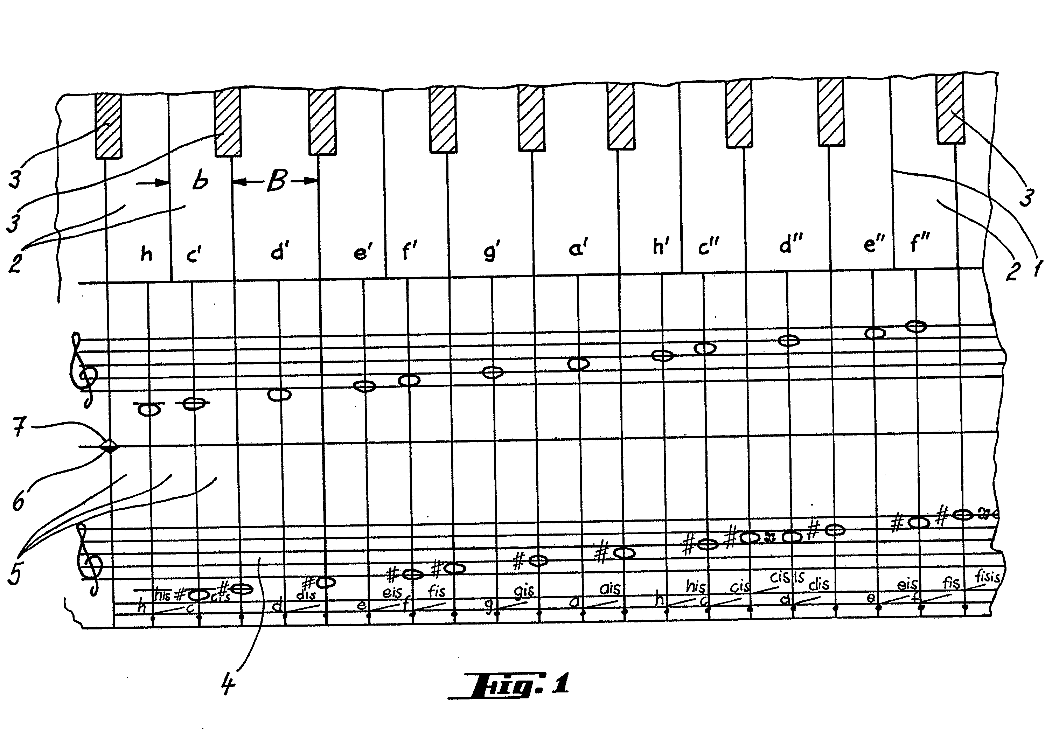

In Fig. 1 ist der Ausschnitt aus einer Tastatur bzw. Klaviatur eines Klaviers gezeigt. Die Klaviatur 1 besteht je Oktave aus sieben Untertasten 2 und fünf Obertasten 3, wobei die Untertasten 2 wegen der bei Musikinstrumenten gewählten Farben auch als weisse Tasten bezeichnet werden, während die Obertasten 3 in Schwarz ausgeführt sind. Die Untertasten 2 dienen zum Anschlag der Töne C, D, E, F, G, A und H. Wie deutlich in Fig. 1 zu erkennen ist, sind dabei die Untertasten 2 für die Töne H und C sowie E und F gegenüber den Untertasten 2 für die Töne D, G und A schmäler ausgebildet, die Verschmälerung ist so gehalten, dass die Breite b einer verschmälerten Taste um ein Viertel geringer ist als die Breite B einer normal breiten Taste. Die Tasten der Töne H (h', h'' usw.) und C (c', c'' usw.) sowie E (e', e'' usw.) und F (f', f'' usw.) sind also in der Breite um ein Viertel der Breite der Tasten der Töne D (d', d'' usw.), G (g', g'' usw.) und A (a', a'' usw.) verkleinert bzw. verschmälert.

In Fig. 1 ist auch beispielhaft eine Schablone 4 gezeigt, die in eine Vielzahl nebeneinanderliegender Felder 5 aufgeteilt ist. Diese Felder 5 sind jeweils gleichbreit, wobei zwei Felder 5 in der Breite eine Taste D, G oder A abdecken, während – was aus dem oben hinsichtlich der Breitenverhältnisse der Tasten Gesagten folgt – drei Felder 5 in der Breite zwei Tasten H und C bzw. E und F überdecken. Die Breite eines Feldes 5 entspricht also der Hälfte der Breite B einer Taste D, G oder A.

Zum exakten und richtigen Anlegen der Schablone 4 an die Klaviatur 1 trägt diese eine Markierung 6, die mit einer entsprechenden Markierung 7 in Übereinstimmung gebracht wird. Durch die gleichmässige Feldereinteilung lässt sich somit eine gleichmässige Anlegeeinteilung für die Schablonen 4 ermöglichen, wozu Voraussetzung die erwähnten Breitenausbildungen der verschiedenen Untertasten 2 ist. Die in Fig. 1 dargestellte Schablone 4 ist direkt auf die Tastatur 1 auflegbar. Sie besteht aus Karton oder einem geeigneten Kunststoff.

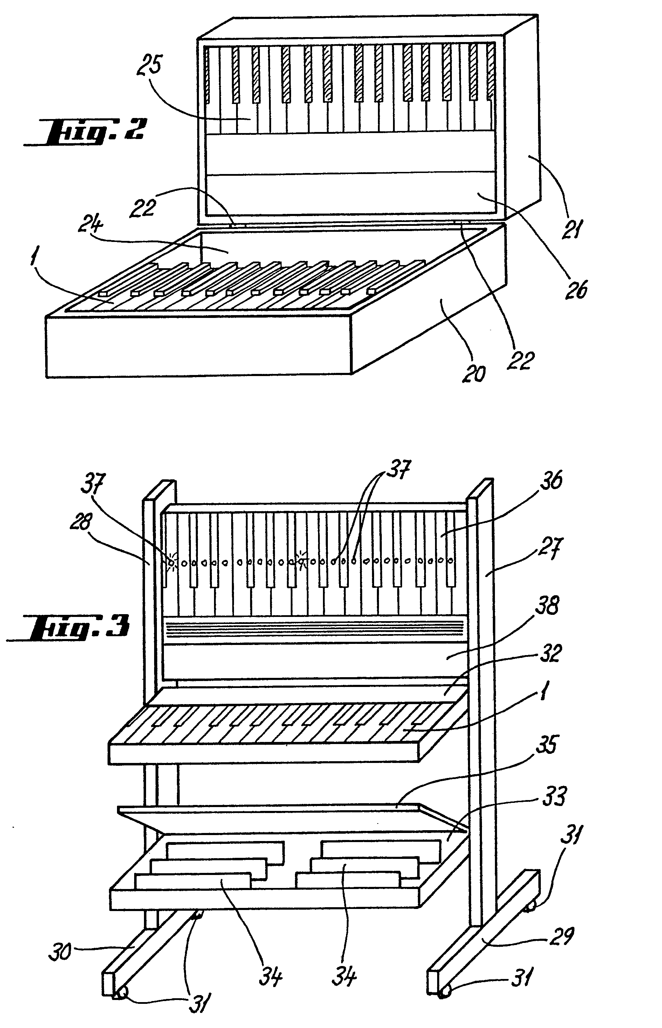

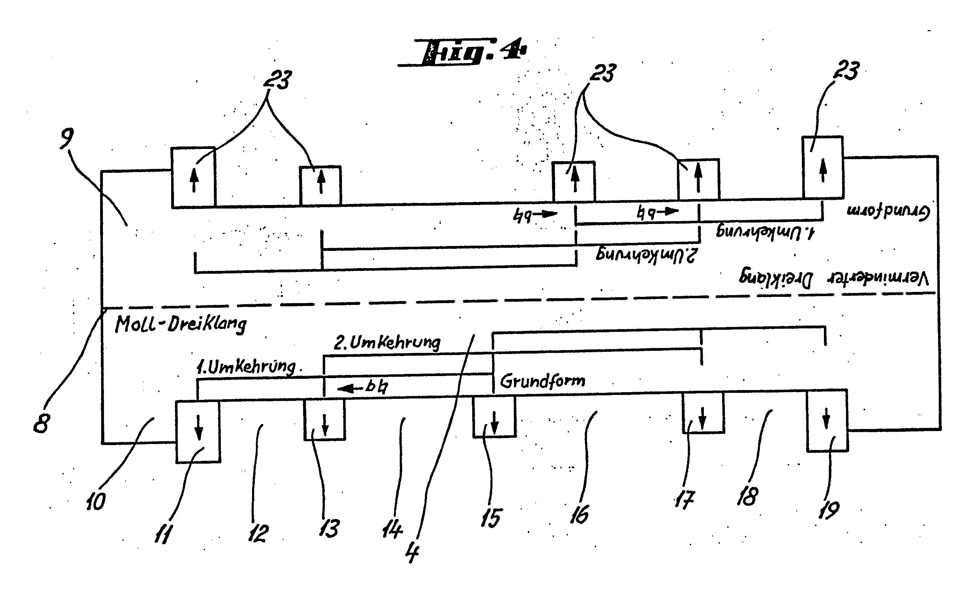

In Fig. 4 ist eine weitere Schablone 4 dargestellt, die jeweils zwei harmonische Formen, hier den Moll-Dreiklang und den verminderten Dreiklang, trägt. Diese Schablone 4 weist eine längsverlaufende Faltlinie 8 auf und wird längs dieser Faltlinie 8 gefaltet, so dass zwei Schenkel 9 und 10 entstehen, die als Standschenkel der Schablone 4 dienen. Diese Schablone 4 ist also aufstellbar; jeder Schenkel 9, 10 trägt eine harmonische Form, und zwar der Schenkel 9 den verminderten Dreiklang und der Schenkel 10 den Moll-Dreiklang. Entsprechend der jeweiligen harmonischen Form sind verschiedene Felder ausgestanzt, während andere Felder stehenbleiben. Beim Moll-Dreiklang (Schenkel 10) bleibt das erste Feld 11 stehen, sodann sind zwei Felder ausgestanzt (freier Raum 12), es folgt ein weiteres stehengebliebenes Feld 13, der drei Feldern in der Breite entsprechende Freiraum 14, das Feld 15, der vier Feldern entsprechende Freiraum 16, das Feld 17, der zwei Feldern entsprechende ausgestanzte Freiraum 18 und schliesslich das Feld 19. Werden die Schablonen 4 im Umdruckverfahren od. dgl. hergestellt, können die Freiräume bildenden Felder beispielsweise durch Schraffuren kenntlich gemacht werden, so dass der Schüler in der Lage ist, diese schraffierten Felder auszuschneiden, um die beschriebenen Freiräume zu schaffen. Diese Schablonen 4 können für die verschiedensten harmonischen Formen, beispielsweise Dur-Septim-Vierklang (Dominant Sept-Akkord, Dur-Tonleiter (Jonische Tonleiter), Dur-Dreiklang, Übermässiger Dreiklang, Pentatonische Tonleiter, Dorische Tonleiter, Phrygische Tonleiter usw., ausgelegt sein, so dass ein volles Lernprogramm darstellbar ist.

Fig. 2 zeigt ein kastenförmig ausgebildetes Musikinstrument mit der beschriebenen Klaviatur 1. Dieses insbesondere für den Unterricht gedachte Musikinstrument besteht im wesentlichen aus dem Unterkasten 20 mit der Klaviatur 1 und dem als Deckel ausgebildeten Oberkasten 21, der über Scharniere 22 schwenkbar am Unterkasten 20 angelenkt ist. Hinter der Klaviatur 1 ist im Unterkasten 20 ein freier Raum vorgesehen, der zur Auflage der jeweils benötigten Schablone 4 dient. Wird die Schablone 4 aufgelegt bzw. aufgestellt, zeigen die stehengebliebenen Felder der Schablone (in Fig. 4 die Felder 11, 13, 15, 17 und 19 des Moll-Dreiklangs bzw. die Felder 23 des verminderten Dreiklangs) alle zu der jeweiligen harmonischen Form gehörenden Tasten an. Der hinter der Klaviatur 1 angeordnete freie Raum trägt das Bezugszeichen 24.

Im Oberkasten 21 ist eine Klaviaturtafel 25 in der beschriebenen Tastenausbildung angeordnet, so dass sich zusammen mit den Notenschablonen gleichzeitig auch die richtige Notierung und die richtige Benennung durch Erhöhungen, Erniedrigungen und Auflösungen ablesen lassen. Der Kasten, also Ober- und Unterkasten 20, 21, besteht aus Holz oder Kunststoff. Unterhalb der Klaviaturtafel 25 ist noch eine Anlegefläche 26 für Schablonen bzw. ein freier Raum zum Aufbewahren der verschiedenen Schablonen vorgesehen.

In Fig. 3 ist ein weiteres Musikinstrument bzw. Lehrinstrument gezeigt. Die Klaviatur 1 ist zwischen zwei vertikal verlaufenden säulenartigen Ständern angeordnet, die die Bezugszeichen 27 und 28 tragen. Dabei ist die Klaviatur 1 als Spieltisch ausgebildet. Die Ständer 27 und 28 ruhen auf quer zu ihnen gerichteten Stützteilen 29 und 30, an deren Unterseite Rollen 31 zum leichten Verschieben vorgesehen sind. Auch hier ist eine Auflagefläche 32 für die Schablonen 4 vorgesehen. Unterhalb des Spieltisches mit der Klaviatur 1 ist zwischen den Ständern 27, 28 ein Ablagekasten 33 zur Aufbewahrung der Schablonen aufgehängt, der mit einer Facheinteilung 34 ausgestattet ist. Der Ablagekasten 33 weist einen schwenkbar an ihm angelenkten Deckel 35 zum Verschliessen und Schutz vor Staub, Beschädigung usw. der Schablonen auf.

Oberhalb des Spieltisches ist eine Klaviaturtafel 36 gehalten, auf der für jede Taste der Klaviatur 1 ein Lämpchen 37 angeordnet ist, das beim Anschlag der entsprechenden Taste aufleuchtet, und so eine Kontrolle sowohl für den Schüler als auch für den Lehrer darstellt. Unterhalb der Klaviaturtafel 36 ist noch eine Anlegefläche 38 für die Schablonen angeordnet, die magnetisch ist und so für einen guten Halt der entsprechend ausgebildeten Schablonen sorgt.

Es sei noch darauf hingewiesen, dass die Tonerzeugung bei den beschriebenen Instrumenten auf verschiedene Weise erfolgen kann, z.B. mechanisch oder elektronisch. Die Musikinstrumente sind besonders für den Schulunterricht geeignet, lassen sich aber auch mit Vorteil beim Selbstunterricht verwenden, was besonders durch die Schablonen ermöglicht wird.

**Patentansprüche**

1. Musikinstrument mit Tastatur, insbesondere Klavier od. dgl. mit Klaviatur, bei dem Lernhilfen in Form von Schablonen einsetzbar sind, dadurch gekennzeichnet, dass bei den die C-dur-Tonleiter bildenden weissen Tasten (Untertasten 2) jeweils die Tasten der Töne H und C sowie E und F in der Breite (b) (Mensur) gegenüber den übrigen weissen Tasten (D, G und A) um je ein Viertel deren Breite (B) verschmälert sind, so dass sich die Breite (b) jeder der untereinander gleichbreiten Tasten H, C, E oder F zur Breite (B) jeder der gleichfalls untereinander gleichbreiten Tasten D, G oder A wie 3 : 4 verhält.

2. Musikinstrument nach Anspruch 1, dadurch gekennzeichnet, dass Schablonen (4) vorgesehen sind, die in parallel nebeneinander liegende gleichbreite Felder (5) aufgeteilt sind, wobei jedes Feld (5) eine Breite aufweist, die der Hälfte der Breite (B) einer Taste D, G oder A entspricht, so dass drei Felder (5) jeweils die Breite (b) zweier Tasten H, C bzw. E, F und zwei Felder (5) jeweils die Breite (B) einer Taste D, G oder A abdecken.

3. Musikinstrument nach Anspruch 2, dadurch gekennzeichnet, dass die direkt auf die Tastatur auflegbaren Schablonen (4) entsprechend der jeweiligen Tonleiter bzw. harmonischen Form ausgestanzte Felder (12, 14, 16, 18) und zungenartig vorragende Felder (11, 13, 15, 17, 19) aufweisen.

4. Musikinstrument nach Anspruch 2 oder 3, dadurch gekennzeichnet, dass die Schablonen (4) aus Karton oder Kunststoff bestehen.

5. Musikinstrument, insbesondere für den Schulunterricht, nach einem der Ansprüche 1 bis 4, dadurch gekennzeichnet, dass die Klaviatur (1) in einem aus Holz oder Kunststoff bestehenden Kasten (20) angeordnet ist, der einen über Scharniere (22) schwenkbar angelenkten Deckel (21) zur Aufnahme und Aufbewahrung der Schablonen (4) trägt.

6. Musikinstrument nach einem der Ansprüche 1 bis 4, dadurch gekennzeichnet, dass die Klaviatur (1) von einem zwischen zwei säulenartigen Ständern (27, 28) angeordneten Spieltisch getragen ist, wobei oberhalb des Spieltisches eine Klaviaturtafel (36) mit Anzeige der jeweils angeschlagenen Taste der Klaviatur (1) und unterhalb des Spieltisches ein Kasten (33) zur Ablage und Aufbewahrung der jeweils nicht benötigten Schablonen (4) angeordnet ist, der wie der Spieltisch an den säulenartigen Ständern (27, 28) befestigt und gehalten ist.

7. Musikinstrument nach Anspruch 5 oder 6, dadurch gekennzeichnet, dass hinter der Klaviatur (1) ein freier Raum (24, 32) zur Auflage der jeweiligen Schablone (4) vorgesehen ist.

8. Musikinstrument nach Anspruch 6 oder 7, dadurch gekennzeichnet, dass unterhalb der Klaviaturtafel (36) eine vorzugsweise magnetische Anlegefläche (38) für die jeweils benötigte Schablone (4) angeordnet ist.

9. Musikinstrument nach einem der Ansprüche 6 bis 8, dadurch gekennzeichnet, dass der Ablagekasten (33) eine Facheinteilung (34) aufweist.

10. Musikinstrument nach einem der Ansprüche 6 bis 9, dadurch gekennzeichnet, dass jeder Ständer (27, 28) auf einem quer zum Ständer verlaufenden Stützteil (29, 30) mit Rollen (31) abgestützt ist.

11. Musikinstrument nach einem der Ansprüche 1 bis 10, dadurch gekennzeichnet, dass die Tonerzeugung auf elektronischem Wege oder mechanisch erfolgt.

12. Musikinstrument nach einem der Ansprüche 1 bis 11, dadurch gekennzeichnet, dass die Schablonen (4) zum Aufstellen einmal unter Bildung zweier jeweils eine voneinander verschiedene harmonische Form tragender Standschenkel (9, 10) gefaltet sind.

## Claims

1. Keyboard instrument, in particular a piano or similar instrument that has keys and that can be used in conjunction with aids to learning in the form of templates, characterized in that, of the white keys (long keys 2) that form the C-major scale, the width (b) of the keys that produce the notes B, C, E, and F is ¼ less than the width (B) of the remaining keys, which produce the notes D, G, and A, so that the ratio of the width of the equally wide keys for B, C, E, and F to the width of the equally wide keys for D, G, and A is 3 : 4.

2. Keyboard instrument as in claim 1, characterized by templates that are separated into a number of adjacent divisions (5) that are equally wide, each division (5) being ½ the width (B) of one D, G, or A key, so that three adjacent divisions (5) will be as wide as two B, C, E, or F keys and two divisions (5) will be as wide as one D, G, or A key.

3. Keyboard instrument as in claim 2, characterized in that some of the divisions (12, 14, 16, 18) in each template, which can be placed directly over the keyboard, are punched out, while other divisions (11, 13, 15, 17, 19) project outward like tongues, to represent various musical scales and harmonic forms.

4. Keyboard instrument as in claim 2 or 3, characterized in that the templates are made of cardboard or plastic.

5. Keyboard instrument, especially intended for use as an instructional device in schools, as in one of claims 1 through 4, characterized in that the keyboard is mounted in a wooden or plastic box consisting essentially of a bottom section (20) and a top section (21) in the form of a cover that accepts and stores the templates (4) and that is connected by hinges (22) to the bottom section.

6. Keyboard instrument as in one of claims 1 through 4, characterized in that the keyboard (1) is mounted on a play table suspended between two vertical posts (27 and 28) with, above the play table, a keyboard diagram (36) with displays that indicate whatever keys in the keyboard (1) are being pressed and, under the play table a box (33) that is intended for storing and protecting the unused templates and that is also suspended between the posts (27 and 28).

7. Keyboard instrument as in claim 5 or 6, characterized by an empty space (24, 32) behind the keyboard for standing up the required templates (4).

8. Keyboard instrument as in claim 6 or 7, characterized by a preferably magnetic surface (38) underneath the keyboard diagram (36) for holding the templates (4) when in use.

9. Keyboard instrument as in one of claims 6 through 8, characterized in that the storage box (33) is divided into compartments (34).

10. Keyboard instrument as in one of claims 6 through 9, characterized in that each post (27, 28) rests on transverse supports (29 and 30) with casters (31) on the bottom.

11. Keyboard instrument as in one of claims 1 through 10, characterized by producing sound either mechanically or electronically.

12. Keyboard instrument as in one of claims 1 through 11, characterized in that the templates (4) can be folded to form two legs (9 and 10) so that they can stand up, each leg also representing a different harmonic form.

## Revendications

1. Instrument de musique à touches, en particulier piano ou analogue à clavier, dans lequel des auxiliaires d'études sous la forme de modèles sont utilisables, caractérisé en ce que, dans l'ensemble des touches blanches (touches inférieures 2) formant la gamme du do majeur, chacune des touches des notes si et do, ainsi que mi et fa d'une largeur (b) (mesure) est rétrécie, par rapport aux touches blanches restantes (ré, sol et la), d'un quart de la largeur (B) de ces dernières, si bien que la largeur (b) de chacune des touches si, do, mi ou fa d'une largeur égale entre elles et la largeur (B) de chacune des touches ré, sol ou la pareillement d'une largeur égale entre elles sont entre elles comme ¾.

2. Instrument de musique selon la revendication 1, caractérisé en ce qu'on a prévu des modèles (4) divisés en champs (5) d'une largeur égale, disposés côte à côte parallèlement, chaque champ (5) ayant une largeur qui correspond à la moitié de la largeur (B) d'une touche ré, mi ou la, si bien que trois champs couvrent chaque fois la largeur (b) de deux touches si, do ou mi, fa et deux champs (5) couvrent chaque fois la largeur (B) d'une touche ré, sol ou la.

3. Instrument de musique selon la revendication 2, caractérisé en ce que les modèles (4) à poser directement sur le clavier comprennent des champs (12, 14, 16, 18) découpés conformément à chaque gamme ou forme harmonique et des champs (11, 13, 15, 17, 19) faisant saillie à la manière de languettes.

4. Instrument de musique selon l'une quelconque des revendications 2 et 3, caractérisé en ce que les modèles (4) se composent de carton ou d'une matière synthétique.

5. Instrument de musique, en particulier pour l'enseignement scolaire, selon l'une quelconque des revendications 1 à 4, caractérisé en ce que le clavier (1) est disposé dans un boîtier constitué de bois ou d'une matière synthétique, ledit boîtier (20) étant raccordé d'une manière articulée et de façon à pivoter par l'intermédiaire de charnières (22) à un couvercle (21) servant à la réception et à la conservation des modèles (4).

6. Instrument de musique selon l'une quelconque des revendications 1 à 4, caractérisé en ce que le clavier (1) est soutenu par une table de jeu située entre deux montants colonnaires (27, 28), une table de clavier (36) avec indication de chaque touche frappée du clavier (1) étant disposée au-dessus de la table de jeu et un boîtier (33) pour le rangement et la conservation de chacun des modèles (4) non nécessités étant prévu en dessous de ladite table de jeu, le boîtier (33) étant fixé et maintenu comme la table de jeu sur les montants colonnaires (27, 28).

7. Instrument de musique selon l'une quelconque des revendications 5 et 6, caractérisé en ce qu'un espace vide (24, 32) est prévu derrière le clavier (1) pour la pose de chacun des modèles (4).

8. Instrument de musique selon l'une quelconque des revendications 6 et 7, caractérisé en ce qu'une surface d'appui (38) de préférence magnétique est disposée, en dessous de la table de clavier (36), pour les modèles chaque fois nécessaires.

9. Instrument de musique selon l'une quelconque des revendications 6 à 8, caractérisé en ce que le boîtier de rangement (33) présente une division de compartiments (34).

10. Instrument de musique selon l'une quelconque des revendications 6 à 9, caractérisé en ce que chaque montant (27, 28) est relié à une pièce de soutien (29, 30) garnie de galets (31) et se développant transversalement aux montants.

11. Instrument de musique selon l'une quelconque des revendications 1 à 10, caractérisé en ce que la production des sons s'effectue par la voie électronique ou mécaniquement.

12. Instrument de musique selon l'une quelconque des revendications 1 à 11, caractérisé en ce que les modèles (4) sont pliés une fois pour la mise en place en formant deux branches fixes (9, 10) portant chacune une forme harmonique différente l'une de l'autre.

Fig. 1

0 058 339

0 058 339

**Fig. 2**

**Fig. 3**

9

0 058 339

Fig. 4

23

23

23

9

Grundform

1. Umkehrung

bḥ→

bḥ→

2. Umkehrung

Verminderter Dreiklang

8

Moll-Dreiklang

2. Umkehrung

1. Umkehrung

←bḥ

Grundform

10

11

12

13

14

4

15

16

17

18

19